# EUROPÄISCHE PATENTSCHRIFT

(11) **EP 1 123 838 B1**
(45) Veröffentlichungstag und Bekanntmachung des Hinweises auf die Patenterteilung: **19.09.2007**
(21) Anmeldenummer: 01101661.5
(22) Anmeldetag: 29.01.2001
(51) Int. Cl.: B60P 7/08, B60R 5/04

(54) **Verzurreinrichtung, insbesondere für einen Kraftfahrzeug-Laderaum**
Tie-down device, especially for a loading space in a motor vehicle
Dispositif d'amarrage, notamment pour un espace de chargement de véhicule automobile

(30) Priorität: 09.02.2000 DE 10005717
(43) Veröffentlichungstag der Anmeldung: 16.08.2001
(73) Patentinhaber: Volkswagen Aktiengesellschaft, 38436 Wolfsburg (DE)
(72) Erfinder: Scholz, Eckhard, Dipl.-Ing., 38154 Königslutter (DE)

(56) Entgegenhaltungen:
- DE-U- 8 301 591
- DE-U- 8 905 859
- DE-U- 29 500 242
- DE-U- 29 911 871

## Beschreibung

Die Erfindung betrifft eine Verzurreinrichtung gemäß dem Oberbegriff des Patentanspruchs 1.

Eine gattungsbildende Verzurreinrichtung ist aus der DE 299 11 871 U1 bekannt, bei der eine Schwenkachse ein Kunststoffprofilteil drehfest trägt, das am Außenumfang mit einer Rastnase ausgebildet ist. Auf das Kunststoffprofilteil ist ein Verzurrglied aufgesteckt. Aus der DE 83 01 591 U1 ist eine Verzurreinrichtung bekannt, bei der die Rastvorrichtung mit einer rechteckprofilförmigen Schwenkachse und einer Feder mit zwei Klemmschenkeln gebildet ist. Die aus der DE 89 05 859 U1 bekannte Verzurreinrichtung weist ein in seine Ruhelage federbelastetes Einhängeglied auf. Weitere bekannte Verzurreinrichtungen dieses Aufbaus (DE 295 00 242 U1, DE 35 22 393 A1 oder EP 0 424 650 A1) enthalten schwenkbar gelagerte ösenartige Verzurrglieder, die zum Durchziehen eines flexiblen Zugorgans, also eines Seiles, eines Gurtes oder einer Kette, dienen, das dann Gepäck oder Ladungsstücke relativ zu einem Ladeboden oder einer Laderaumwand fixiert. Damit das definierte Verzurrglied in Nichtgebrauchszeiten nicht in störender Weise in den Laderaum hineinragt, ist es zwischen einer zurückgezogenen Nichtgebrauchsstellung und zumindest einer Gebrauchsstellung schwenkbar in der Laderaumbegrenzung (Laderaumboden, Laderaumwand) gelagert. In den genannten Konstruktionen sorgt die Schwerkraft dafür, daß sich bei Fehlen einer Zugkraft durch das flexible Zugorgan das Verzurrglied in seiner zurückgezogenen Nichtgebrauchsstellung befindet. Bekannt und im Einsatz sind auch Konstruktionen, bei denen das Verzurrglied von einer Feder in Richtung Nichtgebrauchsstellung beaufschlagt ist. Zur Verringerung der Geräuschentwicklung sieht die erstgenannte Schrift auch einen an einer Schwenkachse des Verzurrglieds oder an einer Aufnahme für dieses angeordneten Abstütznocken vor, an dem eine punktuelle Abstützung letztlich des Verzurrglieds in seiner Nichtgebrauchsstellung erfolgen soll.

Unabhängig davon, ob die Schwerkraft oder eine Federkraft zur Kraft- bzw. Momentenbeaufschlagung des Verzurrglieds in Richtung auf seine Nichtgebrauchsstellung ausgenützt wird, ist mit dem Vorteil der automatischen Positionierung des Verzurrglieds in seiner zurückgezogenen Nichtgebrauchsstellung der Nachteil verbunden, daß das Herstellen einer Verbindung zwischen dem Verzurrglied einerseits und dem flexiblen Zugorgan andererseits dadurch erschwert wird. An dieser Stelle sei eingefügt, daß das Verzurrglied zwar bevorzugt ösenartig ausgebildet ist, es aber auch hakenartig gestaltet sein kann, ebenso wie die Verbindung mit dem flexiblen Zugorgan durch Durchziehen desselben (insbesondere bei einem ösenartigen Verzurrglied) oder aber durch Einhaken desselben erfolgen kann. In jedem Falle stört bei der Herstellung einer derartigen Verbindung zwischen Zugorgan und Verzurrglied die Kraft- bzw. Momentenbeaufschlagung desselben in Richtung seiner Nichtgebrauchsstellung.

Der Erfindung liegt die Aufgabe zugrunde, eine gattungsgemäße Verzurreinrichtung unter Wahrung ihrer Vorteile zu schaffen, die bei Benutzung funktionssicher sowie in einfacher Weise herstellbar ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein besonderer Vorteil der Erfindung ist darin zu sehen, daß sie die definierte Aufgabe mit denkbar einfachen Mitteln löst. Sie beschränkt sich nämlich auf das Vorsehen von Vorsprüngen und Nocken an feststehenden und an bei Schwenkbewegungen des Verzurrglieds ebenfalls verschwenkten Teilen, und zwar in solcher Anordnung, daß diese Vorsprünge und Nocken nur bei in Gebrauchsstellung befindlichem Verzurrglied elastisch zusammenwirken, wobei die übrigen Umfangsbereiche des Kunststoffprofilteils einen Freigang bilden. Die Vorsprünge und Nocken sind relativ zueinander so angeordnet, daß sie nur bei maximal aus der Nlchtgebrauchslage herausgeschwenktem Verzurrglied elastisch zusammenwirken.

An dieser Stelle sei darauf hingewiesen, daß die Elastizität von Nocken und/oder Vorsprung lediglich so groß gewählt zu sein braucht, daß die Rastwirkung ausreicht, um das Verzurrglied entgegen den es in seine Nichtgebrauchsstellung zu schwenken suchenden Kräften und Momenten (Federkraft, Schwerkraft) festhält, wobei diese Haltekraft aber leicht manuell überwindbar sein muß.

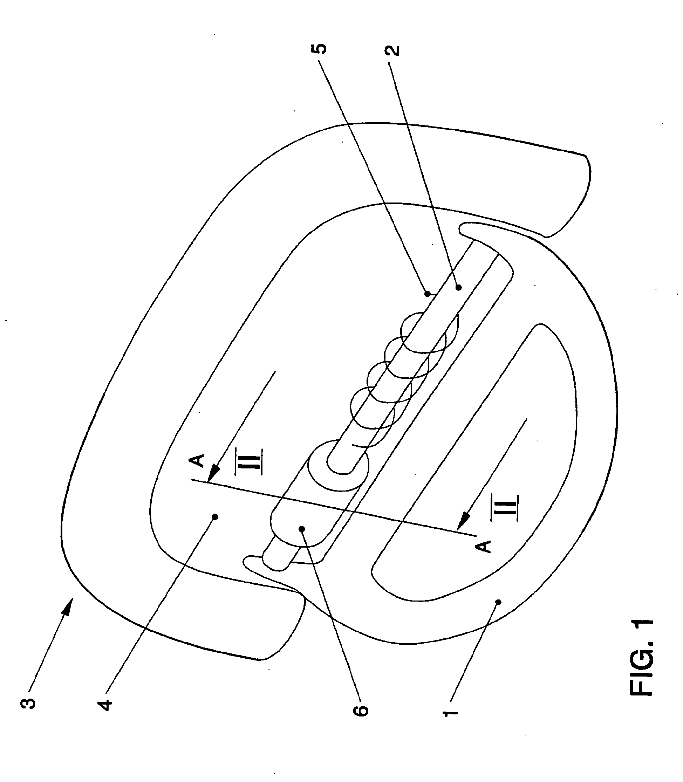

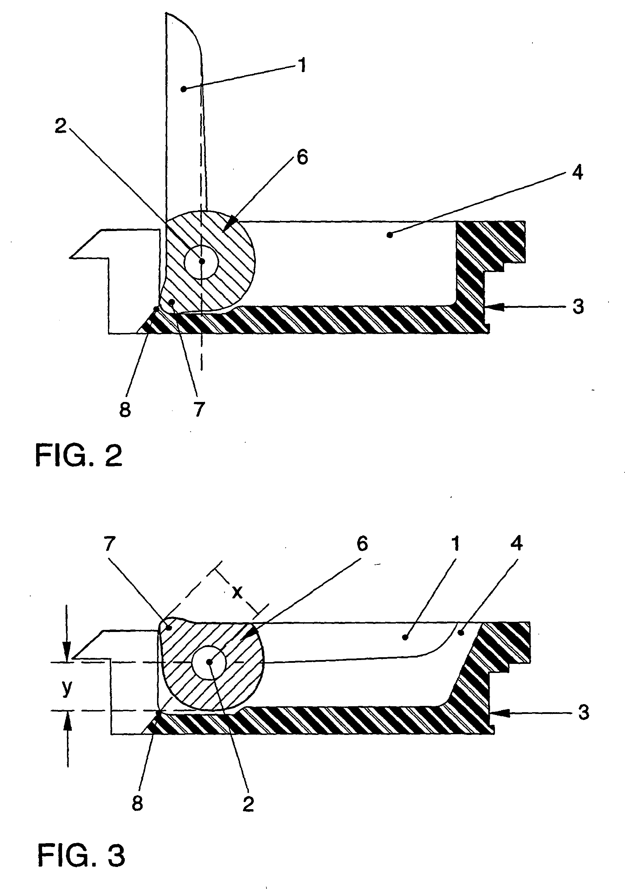

Ein Ausführungsbeispiel der Erfindung wird im folgenden anhand der Zeichnung erläutert, deren Figur 1 perspektivisch eine erfindungsgemäße Verzurreinrichtung unter Beschränkung auf ihre für die Erfindung interessanten Merkmale wiedergibt, während die Figuren 2 und 3 die Schnittansicht gemäß II-II in Figur 1 bei in seine Gebrauchsstellung verschwenktem Verzurrglied (Figur 2) bzw. bei in seiner Nichtgebrauchsstellung befindlichem Verzurrglied (Figur 3) wiedergeben.

Betrachtet man zunächst Figur 1, so enthält die Verzurreinrichtung drei Hauptbestandteile: Das ösenartige Verzurrglied 1 ist mittels der Schwenkachse 2 relativ zu der Aufnahme 3 zwischen einer Nichtgebrauchslage, in der sich das Verzurrglied 1 innerhalb der Ausnehmung 4 der Aufnahme 3 befindet, und der in Figur 1 angenommenen Gebrauchsstellung schwenkbar gelagert. Während das Verzurrglied 1 in seiner Gebrauchsstellung in den Laderaum beispielsweise eines Fahrzeugs hineinragt und zum Durchfädeln oder Festlegen eines flexiblen Zugorgans (nicht dargestellt) freiliegt, wird es in seiner Nichtgebrauchsstellung vollständig von der Ausnehmung 4 aufgenommen, so daß es nicht störend in den Laderaum hineinragt.

Damit das Verzurrglied 1 bei Nichtgebrauch in jedem Fall selbsttätig in die Ausnehmung 4 hineingeklappt wird, ist die Schlingfeder 5 vorgesehen, die, sofern die Schwenkachse 2 an den Schwenkbewegungen des Verzurrglieds 1 teilnimmt, zwischen Schwenkachse 2 und Aufnahme 3 aufgespannt ist, anderenfalls aber unmittelbar an dem Verzurrglied 1 angreift, und zwar stets in das Verzurrglied 1 in seine Nichtgebrauchsstellung innerhalb der Ausnehmung 4 beaufschlagendem Sinne.

Diese ständige Momenten- bzw. Kraftbeaufschlagung erschwert verständlicherweise die Herstellung einer Verbindung zwischen dem Verzurrglied 1 und einem flexiblen Zugorgan, das beispielsweise durch das ösenartige Verzurrglied 1 hindurchgeführt werden soll. Aus diesem Grunde ist in diesem Ausführungsbeispiel auf der Achse 2 das einen von der Rotationssymmetrie abweichenden Querschnitt besitzende Kunststoffelement 6 drehfest angeordnet. Durch seine Unsymmetrie bildet es die in den Figuren 2 und 3 erkennbare Nase 7, die nur bei in seiner maximal herausgeklappten Gebrauchsstellung befindlichem Verzurrglied 1 gleichsam elastisch klemmend zusammenwirkt mit dem Vorsprung 8 an der Aufnahme 3. Bei in Nichtgebrauchsstellung zurückgeschwenktem Verzurrglied 1 (Figur 3) befindet sich die Nase 7 dagegen außerhalb des Wirkbereichs des Vorsprungs 8, so daß die Wirkung der durch die Teile 7 und 8 gebildeten elastischen Rastvorrichtung auf die Gebrauchsstellung des Verzurrglieds 1 beschränkt ist.

In Figur 3 ist hervorgehoben, daß die Nase 7 einen Schwenkradius x (Abstand von der Mittelachse der Schwenkachse 2) besitzt, der größer als der entsprechende Abstand y des Vorsprungs 8 ist. Die übrigen Umfangsbereiche des Kunststoffelements 6 bilden dagegen einen Freigang.

Mit der Erfindung ist also mit einfachen Mitteln eine Verzurreinrichtung geschaffen, die auch hinsichtlich ihrer Verbindung mit einem flexiblen Zugorgan bedienungsfreundlich ist.

## Patentansprüche

1. Verzurreinrichtung mit einem zum Angriff eines flexiblen Zugorgans eingerichteten, vorzugsweise ösenartigen Verzurrglied (1), das mittels einer Schwenkachse (2) zwischen Gebrauchsstellungen, in denen es in einen Laderaum hineinragt, und einer Nichtgebrauchsstellung, in der es den Laderaum freigibt, schwenkbar gelagert ist,
- wobei dem Verzurrglied (1) eine in einer seiner Gebrauchsstellungen wirksame elastische Rastvorrichtung (7, 8) solcher Auslegung zugeordnet ist, daß ihre Wirkung manuell überwindbar ist,
- wobei die Schwenkachse (2) schwenkfest mit dem Verzurrglied (1) verbunden und in einer Aufnahme (3) drehbar gelagert ist, die eine Ausnehmung (4) zur Aufnahme des Verzurrglieds (1) in seiner Nichtgebrauchsstellung sowie zur Bildung der Rastvorrichtung einen Vorsprung (8) aufweist, der in den Weg einer Nase (7) an der Schwenkachse (2) bei Schwenkbewegungen des Verzurrglieds (1) hineinragt,
- **wobei** der Vorsprung (8) und/oder die Nase (7) aus elastischem Material bestehen, und
- **wobei** zur Bildung der Nase (7) die Schwenkachse (2) schwenkfest ein Kunststoffprofil (6) trägt, an dessen Umfang die Nase (7) gebildet ist,
**dadurch gekennzeichnet, dass**
- die übrigen Umfangsbereiche des Kunststoffprofils (6) einen Freigang bilden,
- der Vorsprung (8) und die Nase (7) die elastische Rastvorrichtung bilden,
- wobei die Nase (7) nur bei in maximal herausgeklappter Gebrauchsstellung des Verzurrgliedes (1) elastisch klemmend mit dem Vorsprung (8) an der Aufnahme (3) zusammenwirkt und
- wobei in Nichtgebrauchsstellung des zurückgeschwenkten Verzurrgliedes (1) sich die Nase (7) dagegen außerhalb des Wirkbereichs des Vorsprungs (8) befindet, so dass die Wirkung der elastischen Rastvorrichtung auf die Gebrauchsstellung des Verzurrglieds (1) beschränkt ist.

2. Verzurreinrichtung nach Anspruch 1, **dadurch gekennzeichnet, dass** am Verzurrglied (1) eine dieses in Richtung Nichtgebrauchsstellung beaufschlagende Feder (5) angreift und die Rastvorrichtung (7,8) so ausgelegt ist, daß ihre Wirkung größer als diejenige der Feder (5) bei in seiner einen Gebrauchsstellung befindlichem Verzurrglied (1) ist.

3. Verzurreinrichtung nach Anspruch 1 oder 2, **dadurch gekennzeichnet, dass** der Vorsprung (8) in den Weg der Nase (7) an dem Verzurrglied (1) bei Schwenkbewegungen desselben hineinragt.

## Claims

1. Lashing device having a preferably eye-like lashing member (1) which is set up to be engaged by a flexible traction member and is mounted pivotably by means of a pivot pin (2) between usage positions, in which it juts into a loading space, and a non-usage position, in which it frees the loading space,
- wherein to the lashing member (1) there is assigned an elastic latching mechanism (7, 8) which is operative in one of the said usage positions and is designed such that its effect is manually surmountable,
- wherein the pivot pin (2) is connected in a pivotably secure manner to the lashing member (1) and is rotatably mounted in a receiving fixture (3), which latter has a recess (4) for the reception of the lashing member (1) in its non-usage position and, for the formation of the latching mechanism, has a projection (8) which, upon pivot motions of the lashing member (1), juts into the path of a boss (7) on the pivot pin (2),
- wherein the projection (8) and/or the boss (7) consist(s) of elastic material, and
- wherein, for the formation of the boss (7), the pivot pin (2) bears in a pivotably secure manner a plastics profile (6), on the periphery of which the boss (7) is formed,
**characterized in that**
- the other peripheral regions of the plastics profile (6) form a free passage,
- the projection (8) and the boss (7) form the elastic latching mechanism,
- wherein the boss, (7) interacts in an elastically clamping manner with the projection (8) on the receiving fixture (3) only when the lashing member (1) is in the maximally swung-out usage position, and
- wherein, in the non-usage position of the back-pivoted lashing member (1), the boss (7) is located, by contrast, outside the range of the projection (8), so that the effect of the elastic latching mechanism is confined to the usage position of the lashing member (1).

2. Lashing device according to Claim 1, **characterized in that** the lashing member (1) is acted on by a spring (5) which pressurizes it in the direction of the non-usage position, and the latching mechanism (7, 8) is designed such that its effect is greater than that of the spring (5) when the lashing member (1) is in its one usage position.

3. Lashing device according to Claim 1 or 2, **characterized in that** the projection (8), upon pivot motions of the lashing member (1), juts into the path of the boss, (7) on the said lashing member.

## Revendications

1. Dispositif d'amarrage comportant un organe d'amarrage (1), de préférence en forme d'oeillet, destiné à l'accrochage d'un organe de traction flexible, qui peut pivoter au moyen d'un axe de pivotement (2) entre des positions d'utilisation, dans lesquelles il pénètre dans un espace de chargement, et une position de non utilisation, dans laquelle il libère l'espace de chargement,
- dans lequel un dispositif d'encliquetage (7, 8) élastique actif dans une de ses positions d'utilisation est associé à l'organe d'amarrage (1), en étant conçu de telle manière que son action puisse être surmontée manuellement,
- dans lequel l'axe de pivotement (2) est solidaire en rotation avec l'organe d'amarrage (1) et peut tourner dans un logement (3) qui présente un évidement (4) destiné à recevoir l'organe d'amarrage (1) dans sa position de non utilisation ainsi qu'une saillie (8) destinée à former le dispositif d'encliquetage qui pénètre dans le chemin d'un ergot (7) sur l'axe de pivotement (2) lors de mouvements de pivotement de l'organe d'amarrage (1),
- dans lequel la saillie (8) et/ou l'ergot (7) se compose d'une matière élastique, et
- dans lequel, pour former l'ergot (7), l'axe de pivotement (2) porte un profilé de matière plastique (6) solidaire en rotation, sur la périphérie duquel l'ergot (7) est formé,
**caractérisé en ce que**
- les autres zones de la périphérie du profilé de matière plastique (6) forment un passage libre,
- la saillie (8) et l'ergot (7) forment le dispositif d'encliquetage élastique,
- dans lequel l'ergot (7) ne coopère en serrage élastique avec la saillie (8) sur le logement (3) que lorsque l'organe d'amarrage (1) se trouve dans sa position d'utilisation relevée au maximum, et
- dans lequel, lorsque l'organe d'amarrage (1) se trouve dans sa position rabattue de non-utilisation, l'ergot (7) se trouve au contraire à l'extérieur de la zone utile de la saillie (8), de sorte que l'action du dispositif d'encliquetage élastique soit limitée à la position d'utilisation de l'organe d'amarrage (1).

2. Dispositif d'amarrage selon la revendication 1, **caractérisé en ce qu'**un ressort (5) sollicitant l'organe d'amarrage (1) en direction de la position de non-utilisation agit sur ce dernier et le dispositif d'encliquetage (7, 8) est conçu de telle manière que son action soit supérieure à celle du ressort (5) lorsque l'organe d'amarrage (1) se trouve dans une de ses positions d'utilisation.

3. Dispositif d'amarrage selon la revendication 1 ou 2, **caractérisé en ce que** la saillie (8) pénètre dans le chemin de l'ergot (7) sur l'organe d'amarrage (1) lors de mouvements de pivotement de ce dernier.
